# EUROPÄISCHE PATENTANMELDUNG

(11) **EP 4 520 514 A2**
(43) Veröffentlichungstag der Anmeldung: **12.03.2025**
(21) Anmeldenummer: 24194352.1
(22) Anmeldetag: 13.08.2024
(51) Int. Cl.: B29D 23/00, F16L 11/12, B29C 59/04, F16L 11/14

(54) **SCHLAUCHANORDNUNG, MIT EINER STRUKTUR, VORRICHTUNG UND VERFAHREN ZUR EINBRINGUNG EINER STRUKTUR AUF EINER SCHLAUCHANORDNUNG, VERWENDUNG VON PRÄGEROLLEN**

(30) Priorität: 14.08.2023 DE 202023104608 U
(71) Anmelder: Neoperl GmbH, 79379 Müllheim (DE)
(72) Erfinder: MORITZ, Martin, 68440 Landser (FR)
(74) Vertreter: Mertzlufft-Paufler, Cornelius

(57) **Zusammenfassung**

Erfindungsgemäß wird somit eine Schlauchanordnung (1) mit einer Struktur (2) vorgeschlagen, wobei die Struktur (2) umlaufende Rippen (3), deren axiale Erstreckung längs eines Umfangs vorzugsweise periodisch variiert, und lokal begrenzte Lückenausfüllende Erhebungen (4) hat, wodurch wiederum ein Flechteindruck entsteht, ohne dass eine separate Umflechtung der Schlauchanordnung (1) erfolgt, und wobei ein Aufbringen der Struktur (2) durch wenigstens zwei auf der Schlauchanordnung (1) abrollbare, insbesondere sychnronisiert auf der Schlauchanordnung abrollbare, Prägewerkzeuge (7), insbesondere Prägerollen (8) erfolgt, die Teil eines Extrusionsprozesses sind. (vgl. Fig. 1)

## Beschreibung

Die Erfindung betrifft eine Schlauchanordnung, insbesondere zur Leitung von Fluiden, mit einer außenseitigen Struktur.

Die Erfindung betrifft weiter eine Schlauchanordnung, insbesondere zur Leitung von Fluiden, mit einer außenseitigen Struktur mit wenigstens einer umlaufenden Rippe.

Die Erfindung betrifft weiter eine Vorrichtung zur Einbringung einer Struktur auf einer Schlauchanordnung, insbesondere zur Leitung von Fluiden.

Die Erfindung betrifft zudem ein Verfahren zur Einbringung einer Struktur auf einer extrudierten Schlauchanordnung, insbesondere zur Leitung von Fluiden.

Die Erfindung betrifft schließlich eine Verwendung von Prägerollen als Teil eines Extrusionsprozesses zur Einbringung einer Struktur auf einer Schlauchanordnung, insbesondere Fluidleitung.

Aus der Praxis sind Schlauchanordnungen mit Strukturen bekannt, beispielsweise als Umflechtungen zur Verbesserung der Haptik oder optischer Aspekte.

Der Erfindung liegt die Aufgabe zugrunde, die optischen und/oder haptischen und/oder mechanischen Gebrauchseigenschaften einer Schlauchanordnung, vorzugsweise zum Einsatz im Sanitär- und Heizungsbereich vorteilhaft zu gestalten. Hierzu wird eine mehrdimensionale, vorzugsweise dreidimensionale Struktur auf eine äußere Schicht einer mehrschichtigen extrudierten Schlauchanordnung, insbesondere zur Leitung von Fluiden, mittels Prägewerkzeugen, insbesondere Prägerollen, vorzugsweise oberhalb einer Glasübergangstemperatur und/oder als Teil eines Extrusionsprozesses, eingeprägt.

Zur Lösung dieser Aufgabe schlägt die Erfindung die Merkmale des Anspruchs 1 vor. Insbesondere wird somit erfindungsgemäß bei einer Schlauchanordnung, insbesondere zur Leitung von Fluiden, mit einer außenseitigen Struktur vorgeschlagen, dass die Struktur, vorzugsweise bestehend aus einem thermoplastischen Kunststoff, verprägt ist. Die Einbringung einer Prägung eröffnet eine Vielzahl von Unterschiedlichen Gestaltungsmöglichkeiten bis hin zu Simulationen von Flechtmustern.

Günstig ist es, wenn die Prägung thermoplastisch vorgenommen wird. Somit sind besonders plastisch wirkende Gestaltungen einfach erreichbar.

Besonders vorteilhaft können über die geprägte außenseitige Struktur beispielsweise haptische und/oder optische Eigenschaften der Schlauchanordnung verbessert werden.

Bei einer weiteren vorteilhaften Ausgestaltung kann vorgesehen sein, dass die Struktur in einer Verlaufsrichtung der Schlauchanordnung periodisch ist.

Besonders vorteilhaft kann durch eine periodische außenseitige Struktur, beispielsweise eine periodisch variierende Struktur, der Schlauchanordnung beispielsweise ein Flechteindruck generiert werden, ohne dass eine tatsächliche Umflechtung auf der Schlauchanordnung aufzubringen.

Alternativ oder zusätzlich kann vorgesehen sein, dass die Struktur unterschiedliche Schichtdicken, insbesondere einer äußeren Schicht, aufweist.

Die äußere Schicht der Schlauchanordnung kann dabei beispielsweise einen äußersten Umfang der Schlauchanordnung definieren und/oder die Schicht sein, die in keinem Fluidkontakt steht.

Besonders vorteilhaft können über unterschiedliche Schichtdicken, beispielsweise Form- und/oder Druckbeständigkeiten und/oder haptische Eigenschaften der Schlauchanordnung optimiert und/oder dem Anwendungsfall entsprechend angepasst werden.

Bei einer weiteren Vorteilhaften Ausgestaltung kann vorgesehen sein, dass die Struktur in einer auf einer vorzugsweise ungeprägten inneren Schicht aufgebrachten äußeren Schicht, die vorzugsweise stoffschlüssig miteinander verbunden sind, ausgebildet ist.

Überaus vorteilhaft kann somit beispielsweise ein Einfluss der Struktur auf eine während einer Anwendung innerhalb der Schlauchanordnung vorgesehene und demnach die ungeprägte innere Schicht kontaktierende Fluidströmung verhindert werden. Somit ist es beispielsweise möglich, vielfältige Strukturen problemlos und unabhängig von Strömungseigenschaften des oder eines Fluids innerhalb der Schlauchanordnung zu realisieren.

Weiterhin kann beispielsweise vorgesehen sein, dass durch die äußere Schicht, die beispielsweise stoffschlüssig mit der ungeprägten inneren Schicht verbunden ist, die mechanischen Eigenschaften vorteilhaft hinsichtlich Knicksteifigkeit und Berstdruck beeinflusst werden.

Bei einer weiteren vorteilhaften Ausgestaltung kann vorgesehen sein, dass die oder eine äußere Schicht der Schlauchanordnung aus einem thermoplastischen Kunststoff besteht.

Beispielsweise kann somit überaus vorteilhaft eine Knicksteifigkeit und/oder eine Druckbeständigkeit der Schlauchanordnung erhöht werden.

Alternativ oder zusätzlich kann vorteilhaft vorgesehen sein, dass eine, beispielsweise die bereits erwähnte, äußere Schicht der Schlauchanordnung aus einem Elastomer-Kunststoff besteht.

Somit können beispielsweise spezifische Eigenschaften der Schlauchanordnung erzielt werden. Vorteilhaft kann somit beispielsweise eine griffige Oberfläche des Außenschlauches erreicht. Ferner können durch den Elastomer-Außenschlauch beispielsweise auch andere vorteilhafte haptische und/oder optische Effekte erzielt werden.

Bei einer weiteren vorteilhaften Ausgestaltung kann vorgesehen sein, dass ein Verhältnis einer Außenschlauchwandstärke zu einer Innenschlauchwandstärke der Schlauchanordnung größer als 0.1 und kleiner als 5, insbesondere 0.1, 0.3...5, vorzugsweise 0.3, ist. Besonders vorteilhaft kann somit beispielsweise eine verbesserte Stabilität der Schlauchanordnung erzielt werden.

Bei einer weiteren vorteilhaften Ausgestaltung kann vorgesehen sein, dass der geprägte thermoplastische Kunststoff ein Elastizitätsmodul (E-Modul) von mindestens 1000 MPa, insbesondere 1200 MPa, 1300 MPa, vorzugsweise 1700 MPa, hat. Die dadurch vorteilhaft erreichte hohe Festigkeit des Außenschlauches erhöht somit dessen Stützwirkung auf den Innenschlauch.

Alternativ oder zusätzlich sind zur Lösung der genannten Aufgabe erfindungsgemäß die Merkmale des nebengeordneten, auf eine Schlauchanordnung, insbesondere zur Leitung von Fluiden, mit wenigstens einer umlaufenden Rippe gerichteten Anspruchs vorgesehen. Insbesondere wird somit erfindungsgemäß vorgeschlagen, dass die wenigstens eine umlaufende eine axiale Erstreckung hat, die längs eines Umfangs vorzugsweise periodisch variiert, insbesondere wobei mindestens zwei vorzugsweise benachbarte Rippen identisch ausgebildet sind.

Besonders vorteilhaft ist dabei, dass mit den umlaufenden Rippen und der längs eines Umfangs variierenden axialen Erstreckung ein Flechteindruck generiert werden, ohne dass eine gesonderte Umflechtung auf der Schlauchanordnung aufgebracht wird. Hierdurch entsteht vorteilhaft der optische und/oder haptische Eindruck einer Umflechtung. Vorteilhaft ist zudem, dass somit ohne optische, haptische und/oder qualitative Beeinträchtigungen Material gespart, Prozesszeiten deutlich reduziert und der gesamte Fertigungsprozess vereinfacht werden kann.

Alternativ oder zusätzlich wird erfindungsgemäß vorgeschlagen, dass durch eine Reduzierung der axialen Erstreckung gebildete Lücken durch lokal begrenzte, vorzugsweise passende, Erhebungen ausgefüllt sind.

Dabei ist besonders vorteilhaft, dass somit beispielsweise eine weitere Verbesserung der Haptik und/oder des Flechteindrucks generiert werden kann.

Bei einer weiteren vorteilhaften Ausgestaltung kann vorgesehen sein, dass die Schlauchanordnung mehrschichtig, insbesondere zweischichtig, ausgebildet ist. Hierbei kann beispielsweise vorgesehen sein, dass die Struktur auf einer äußeren Schicht ausgebildet ist und/oder dass zwischen wenigstens zwei Schichten eine stoffschlüssige Verbindung besteht.

Dabei kann beispielsweise vorgesehen sein, dass eine innere Schicht ein beispielsweise strömendes Fluid kontaktiert und somit dazu ausgebildet sein kann und/oder soll, entsprechenden Strömungseigenschaften und/oder mechanischen Belastungen standzuhalten. Die äußere Schicht der Schlauchanordnung kann dabei beispielsweise aufgrund der darauf eingeprägten Struktur optische und/oder haptische Funktionen erfüllen. Somit kann beispielsweise vorgesehen sein, dass die innere Schicht mit einem zur äußeren Schicht differenzierten oder identischen Material bzw. Werkstoff ausgebildet ist.

Die stoffschlüssige Verbindung kann dabei beispielsweise eine Adhäsionsverbindung sein.

Besonders vorteilhaft ist, dass somit eine unlösbare Verbindung zwischen beiden Schichten generiert werden kann, wobei ebenfalls vorteilhaft jede Schicht entsprechend der Belastungen bzw. Anforderungen steifer und/oder elastischer ausgebildet werden kann.

Bei einer weiteren Lösung der gestellten Aufgabe von möglicherweise eigenständiger erfinderischer Qualität oder bei einer vorteilhaften Ausgestaltung der zuvor beschriebenen Lösung und/oder einer der zuvor beschriebenen Ausgestaltungen kann vorgesehen sein, dass zwischen zwei benachbarten Rippen an wenigstens einem Punkt sich kreuzende und/oder schneidende, insbesondere linienförmige, Vertiefungen ausgebildet sind.

Besonders vorteilhaft ist dabei, dass somit ein optisch anschaulicher Übergang zwischen zwei benachbarten Rippen generiert und wodurch wiederum der Flechteindruck verbessert werden kann.

Bei einer weiteren vorteilhaften Ausgestaltung kann vorgesehen sein, dass die Rippen und/oder die Erhebungen bikonvex ausgebildet sind.

Dabei ist besonders vorteilhaft, dass sich hierdurch beispielsweise eine spezielle Optik ergibt, die von einer separat aufgetragenen Umflechtung unterschieden werden kann. Weiterhin ist vorteilhaft, dass eine bikonvexe Form entgegen einer geradlinigen Form eine höhere Kontaktfläche bietet, die wiederum eine Verbesserung der Haptik generieren kann.

Bei einer weiteren vorteilhaften Ausgestaltung kann vorgesehen sein, dass sich die die Lücken ausfüllenden Erhebungen, insbesondere in ihrer Dimension, von den Rippen unterscheiden.

Dabei kann beispielsweise vorgesehen sein, dass die die Lücken ausfüllenden Erhebungen kleiner sind als die Rippen.

Besonders vorteilhaft ist dabei, dass somit beispielsweise die Rippen und/oder die Erhebungen unterschiedlich ausgestaltet werden können, wodurch wiederum vorteilhaft verschiedene Strukturen ausgebildet werden können.

Alternativ oder zusätzlich sind zur Lösung der genannten Aufgabe erfindungsgemäß die Merkmale des nebengeordneten, auf eine Schlauchanordnung, insbesondere zur Leitung von Fluiden, gerichteten Anspruchs vorgesehen. Insbesondere wird somit erfindungsgemäß vorgeschlagen, dass die Struktur umlaufende Rippen hat, deren axiale Erstreckung längs eines Umfangs vorzugsweise periodisch variiert, wobei durch eine Reduzierung der axialen Erstreckung gebildete Lücken durch lokal begrenzte, vorzugsweise passende, zu den Rippen in axialer Erstreckung versetzte Erhebungen ausgefüllt sind, wobei in einem Übergang zwischen einer Rippe und einer Erhebung vorzugsweise umlaufende und/oder geschlossene, insbesondere linienförmig verlaufende, Vertiefungen gebildet sind, wobei sich wenigstens zwei Vertiefungen vorzugsweise mehrfach einander kreuzend schneiden.

Dabei ist besonders vorteilhaft, dass durch eine axiale Versetzung der Erhebungen zu den Rippen und der kreuzend schneidenden Vertiefungen in dem Übergang zwischen einer Rippe und einer Erhebung beispielsweise ein Flechteindruck und/oder die Haptik der Struktur verbessert werden kann.

Alternativ oder zusätzlich sind zur Lösung der genannten Aufgabe erfindungsgemäß die Merkmale des nebengeordneten, auf eine Vorrichtung zur Einbringung einer Struktur auf einer Schlauchanordnung, insbesondere zur Leitung von Fluiden, gerichteten Anspruchs vorgesehen. Insbesondere wird somit erfindungsgemäß vorgeschlagen, dass die Vorrichtung stationär und/oder adaptierbar, insbesondere hinter einem Extruder, mit wenigstens zwei auf der Schlauchanordnung abrollbaren, insbesondere synchron zueinander abrollbaren, Prägewerkzeugen, insbesondere Prägerollen, ausgebildet ist.

Dabei kann beispielsweise vorgesehen sein, dass die Vorrichtung beispielsweise als fest installierbares- oder adaptierbares Beistellgerät so hinter dem Extruder positioniert ist, dass die Struktur beispielsweise auf eine äußere noch plastifizierbare Schicht einer extrudierten Schlauchanordnung, beispielsweise im Anschluss und/oder als Teil eines Extrusionsprozesses, eingeprägt werden kann.

Besonders vorteilhaft ist bei Prägerollen, dass beispielsweise in Fertigungsrichtung gratfrei und/oder unterbrechungsfrei endlose Schlauchanordnungen hergestellt werden können. Somit können ebenfalls besonders vorteilhaft die bei Wellschläuchen bekannten umlaufenden Grate, die die optische Anmutung und einem Umflochtenen Erscheinungsbild der Oberfläche der Schlauchanordnung stören, verhindert werden.

Eine Synchronisation der Prägerollen kann beispielsweise über eine elektronische Steuerung realisiert werden.

Hierbei ist besonders vorteilhaft, dass somit beispielsweise kreuzende und/oder schneidende, insbesondere linienförmige, Vertiefungen der Struktur miteinander fluchten, auch wenn diese in Umfangsrichtung von unterschiedlichen Prägerollen gefertigt werden.

Bei einer weiteren vorteilhaften Ausgestaltung kann vorgesehen sein, dass die wenigstens zwei Prägewerkzeuge, insbesondere Prägerollen, gegenüberliegend ausgebildet sind, insbesondere so dass diese während der Aufbringung einer Struktur einer extrudierten Schlauchanordnung ein Widerlager bilden.

Hierdurch kann vorteilhaft beispielsweise eine zur Aufbringung der Struktur notwendige Stabilität und/oder ein definierter Anpressdruck zwischen den beiden Prägewerkzeugen während der Aufbringung der Struktur generiert werden.

Bei einer weiteren vorteilhaften Ausgestaltung kann vorgesehen sein, dass die wenigstens zwei Prägewerkzeuge, insbesondere Prägerollen, von einer Antriebseinheit angetrieben werden.

Besonders vorteilhaft ist dabei, dass somit beispielsweise (vor)definierte Drehzahlen der auf der Schlauchanordnung abrollbaren Prägewerkzeuge generiert werden können.

Bei einer weiteren vorteilhaften Ausgestaltung kann vorgesehen sein, dass die wenigstens zwei Prägewerkzeuge, insbesondere Prägerollen, von jeweils einer positionierbaren und/oder zustellbaren Haltevorrichtung drehbar gelagert sind.

Über die Positionierung und/oder Zustellung der Haltevorrichtung, die beispielsweise als Backenfutter, vorzugsweise als Vierbackenfutter, ausgebildet sein kann, kann somit insbesondere über eine Zustellung vorteilhaft die Prägetiefe eingestellt werden. Weiterhin kann beispielsweise durch die Positionierung der Haltevorrichtung ebenfalls vorteilhaft eingestellt werden, Abschnitte der Schlauchanordnung mit Prägung und ohne Prägung aufeinander folgen zu lassen.

Besonders vorteilhaft kann hierbei somit beispielsweise an den Enden der Schlauchanordnung das Einprägen der Struktur durch ein Verstellen der Prägerollen unterbrochen werden, damit beispielsweise ein Schlauchnippel angespritzt werden kann.

Bei einer weiteren vorteilhaften Ausgestaltung kann vorgesehen sein, dass wenigstens zwei gegenüberliegende Prägewerkzeuge zu wenigstens zwei weiteren gegenüberliegenden Prägewerkzeugen auf einer gleichen Ebene und/oder axial versetzt, insbesondere in einem Winkel, zueinander ausgebildet sind.

Dabei kann beispielsweise vorgesehen sein, dass die Prägewerkzeuge paarweise beispielsweise rechtwinklig zueinander ausgebildet sind.

Günstig ist es, wenn die wenigstens zwei Prägewerkzeuge zusammen einen vollständigen Umfang der Schlauchanordnung abdecken. Unschöne Längsstrukturen sind somit vermeidbar oder reduzierbar.

Besonders vorteilhaft ist dabei, dass somit beispielsweise die Prägewerkzeuge, die mit einer negativen Form der Struktur ausgebildet sind, kostengünstiger hergestellt werden können, da beispielsweise die Komplexität zur Fertigung eines einzelnen Prägewerkzeuges zur Einprägung der gesamten Struktur vereinfacht werden kann. Somit kann beispielsweise vorgesehen sein, dass die jeweils vorzugsweise paarweise ausgebildeten Prägewerkzeuge jeweils ein Muster einbringen, wobei beispielsweise die Gesamtheit aller Muster die Struktur bilden.

Vorteilhaft ist zudem, beispielsweise bei paarweisen axial zueinander versetzten und synchron zueinander auf der Schlauchanordnung abrollenden Prägewerkzeugen, dass somit beispielsweise eine Überlappung der Prägewerkzeuge an der Schlauchanordnung ermöglicht und die Entstehung von Axialrippen verhindert werden kann.

Alternativ oder zusätzlich sind zur Lösung der genannten Aufgabe erfindungsgemäß die Merkmale des nebengeordneten, auf ein Verfahren zur Einbringung einer Struktur auf einer extrudierten Schlauchanordnung,insbesondere zur Leitung von Fluiden, gerichteten Anspruchs vorgesehen. Insbesondere wird somit erfindungsgemäß vorgeschlagen, dass auf eine erste extrudierte Schicht eine zweite Schicht stoffschlüssig aufgetragen wird, wobei auf die zweite Schicht der Schlauchanordnung, insbesondere die äußere Schicht der Schlauchanordnung, beispielsweise oberhalb einer Glasübergangstemperatur, über wenigstens zwei auf der Schlauchanordnung abrollbare Prägewerkzeuge, insbesondere Prägerollen, eine umlaufende Struktur aufgebracht wird.

Die zweite Schicht kann dabei beispielsweise eine Deckschicht sein, wobei die Temperatur oberhalb der Glasübergangstemperatur beispielsweise mehr als 200°C betragen kann. Dabei kann beispielsweise vorgesehen sein, dass die zweite Schicht in einer Extruderdiervorrichtung vorzugsweise bei 240°C hergestellt wird, wobei sich beispielsweise an einem Austritt der Extrudiervorrichtung die zweite Schicht der extrudierten Schlauchanordnung auf beispielsweise 200°C abkühlt. Somit ist besonders vorteilhaft ein pastöser Zustand der Deckschicht erreicht, bei dem eine sehr gute Prägbarkeit generiert werden kann.

Bei einer weiteren vorteilhaften Ausgestaltung kann vorgesehen sein, dass die wenigstens zwei Prägewerkzeuge, insbesondere Prägerollen, synchron zueinander auf der Schlauchanordnung abrollen.

Dabei kann beispielsweise zudem vorgesehen sein, dass die synchronisierten Prägewerkzeuge beispielsweise zusätzlich zu einer Vortriebsgeschwindigkeit der extrudierten Schlauchanordnung synchronisiert werden können.

Besonders vorteilhaft ist dabei, dass somit beispielsweise eine kontinuierliche Struktur ohne Axialrippen aufgebracht werden kann. Dies kann insbesondere dann realisiert werden, wenn die synchron zueinander abrollenden Prägewerkzeuge beispielsweise versetzt zueinander angeordnet sind.

Bei einer weiteren vorteilhaften Ausgestaltung kann vorgesehen sein, dass die Prägewerkzeuge, insbesondere Prägerollen, zur Einbringung der Struktur automatisch und/oder manuell zugefahren und anschließend auseinandergefahren werden.

Besonders vorteilhaft ist dabei, dass somit beispielsweise eine definierte Prägetiefe beispielsweise durch eine Zustellung mit einer definierten Zustellkraft und/oder Haltekraft generiert werden kann. Somit kann beispielsweise ein Prägemuster von 3/10 mm erreicht werden.

Bei einer weiteren vorteilhaften Ausgestaltung kann vorgesehen sein, dass die Prägewerkzeuge, insbesondere Prägerollen, vor und/oder während der Einbringung der Struktur gekühlt werden.

Dabei kann beispielsweise vorgesehen sein, dass eine Kühlung der Prägewerkzeuge vor und/oder während dem Einbringen der Struktur besonders vorteilhaft so gewählt ist, dass beispielsweise ein Anhaften der temperierten Schicht an einem Prägewerkzeug verhindert und/oder ausgeschlossen werden kann.

Alternativ oder zusätzlich sind zur Lösung der genannten Aufgabe erfindungsgemäß die Merkmale des nebengeordneten, auf eine Verwendung von Prägewerkzeugen, insbesondere Prägerollen, als Teil eines Extrusionsprozesses zur Einbringung einer Struktur auf einer Schlauchanordnung, insbesondere zur Leitung von Fluiden, gerichteten Anspruchs vorgesehen. Insbesondere wird somit erfindungsgemäß vorgeschlagen, dass wenigstens zwei gegenüberliegende Prägerollen auf der Schlauchanordnung zueinander synchronisiert abrollbar sind und/oder ein Widerlager bilden.

Dabei kann beispielsweise vorgesehen sein, dass die Prägewerkzeuge, insbesondere die Prägerollen, direkt hinter einem Extruder bzw. am Ende einer Extrusionvorrichtung stationär und/oder adaptierbar positionierbar sind. Besonders vorteilhaft ist dabei, dass somit beispielsweise die Temperierung der Schlauchanordnung durch den Extrusionprozess zur Einbringung der Struktur genutzt werden kann.

Vorteilhaft ist zudem, wenn der Extrusionsprozess so eingestellt werden kann, dass die Temperatur der Schlauchanordnung am Ende einer Extrusionvorrichtung beispielsweise oberhalb einer Glasübergangstemperatur liegt, da somit eine gute Prägbarkeit der Schlauchanordnung generiert werden kann.

Durch eine Synchronisation der auf der Schlauchanordnung abrollbaren Prägewerkzeuge, die beispielsweise durch eine elektronische Steuerung realisiert werden kann, kann zudem vorteilhaft erreicht werden, dass beispielsweise Vertiefungen der Struktur miteinander fluchten, auch wenn diese Vertiefungen beispielsweise in Umfangsrichtung von verschiedenen Prägewerkzeugen gefertigt werden.

Die Erfindung wird nun anhand von Ausführungsbeispielen näher beschrieben, ist jedoch nicht auf die Ausführungsbeispiele beschränkt. Weitere Ausführungsbeispiele ergeben sich durch eine Kombination der Merkmale einzelner oder mehrerer Ansprüche untereinander und/oder mit einzelnen oder mehreren Merkmalen des Ausführungsbeispiels.

Es zeigt in jeweils stark vereinfachter Darstellung
- Fig. 1: verschiedene dreidimensionale Ansichten einer Schlauchanordnung mit Struktur,
- Fig. 2: eine dreidimensionale Ansicht eines Prägewerkzeuges,
- Fig. 3: eine dreidimensionale Darstellung eines in einer Haltevorrichtung drehbar gelagerten Prägewerkzeuges,
- Fig. 4: eine dreidimensionale Darstellung eines Prägewerkzeuges mit zusätzlicher Darstellung von zur Aufbringung der Struktur auf der Schlauchanordnung abrollbaren und gegenüberliegenden Prägewerkzeugen während der Einbringung der Struktur,
- Fig. 5: eine weitere dreidimensionale Darstellung mit jeweils zwei gegenüberliegend und auf der Schlauchanordnung abrollbaren Prägewerkzeugen in jeweils drehbar gelagerten Haltevorrichtungen während der Einbringung der Struktur.

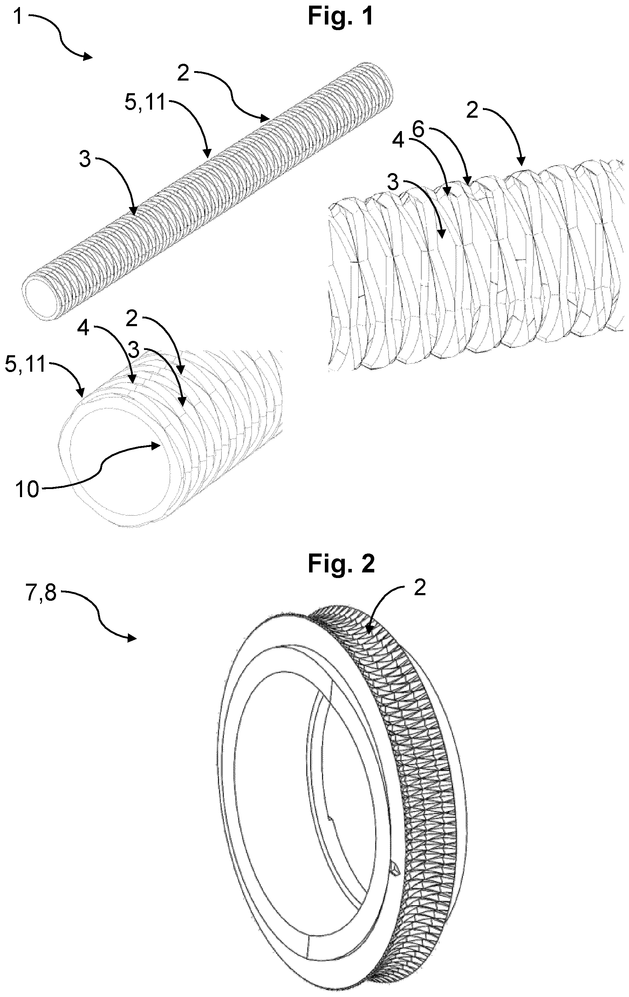

Fig. 1 zeigt eine im Ganzen mit 1 bezeichnete Schlauchanordnung, insbesondere zur Leitung von Fluiden, mit einer außenseitigen geprägten Struktur 2, die in einer Verlaufsrichtung der Schlauchanordnung 1 periodisch ist und unterschiedliche Schichtdicken aufweist. Die Struktur 2 hat umlaufende Rippen 3, deren axiale Erstreckung längs eines Umfangs periodisch variiert. Weiterhin zeigt sich, dass zwei benachbarte Rippen 3 identisch ausgebildet sind. Die durch eine Reduzierung der axialen Erstreckung gebildeten Lücken sind durch lokal begrenzte, passende Erhebungen 4 ausgefüllt.

Die Erhebungen 4 und die Rippen 3 sind in diesem Ausführungsbeispiel bikonvex ausgebildet.

Weiterhin ist in diesem Ausführungsbeispiel gezeigt, dass die Struktur 2 auf einer äußeren Schicht 5 bzw. zweiten Schicht 11 der Schlauchanordnung 1 ausgebildet ist, während eine erste Schicht 10 einen Innendurchmesser der Schlauchanordnung1 definiert. Beide Schichten 10,11 sind dabei stoffschlüssig verbunden.

Es kann somit gesagt werden, dass die Schlauchanordnung 1 in diesem Ausführungsbeispiel mehrschichtig ausgebildet ist, wobei die Erhebungen 4 kleiner dimensioniert sind als die Rippen 3.

Zwischen zwei benachbarten Rippen 3 bzw. in einem Übergang zwischen einer Rippe 3 und einer Erhebung 4 sind dabei sich kreuzende und schneidende linienförmige Vertiefungen 6 ausgebildet. Es zeigt sich zudem, dass die die Lücken füllenden Erhebungen 4 zu den Rippen 3 in axialer Erstreckung versetzt sind.

Fig. 2 zeigt ein Prägewerkzeug 7, welches in diesem und den folgenden Ausführungsbeispielen als Prägerolle 8 ausgebildet ist. Funktionell und/oder konstruktiv zu dem vorangehenden Ausführungsbeispiel gleichartige oder identische Bauteile und Funktionseinheiten sind mit denselben Bezugszeichen bezeichnet und nicht noch einmal gesondert beschrieben.

Die Prägerolle 8 trägt dabei die entsprechend der aufgebrachten Struktur 2 entgegengesetzte bzw. negative Struktur 2.

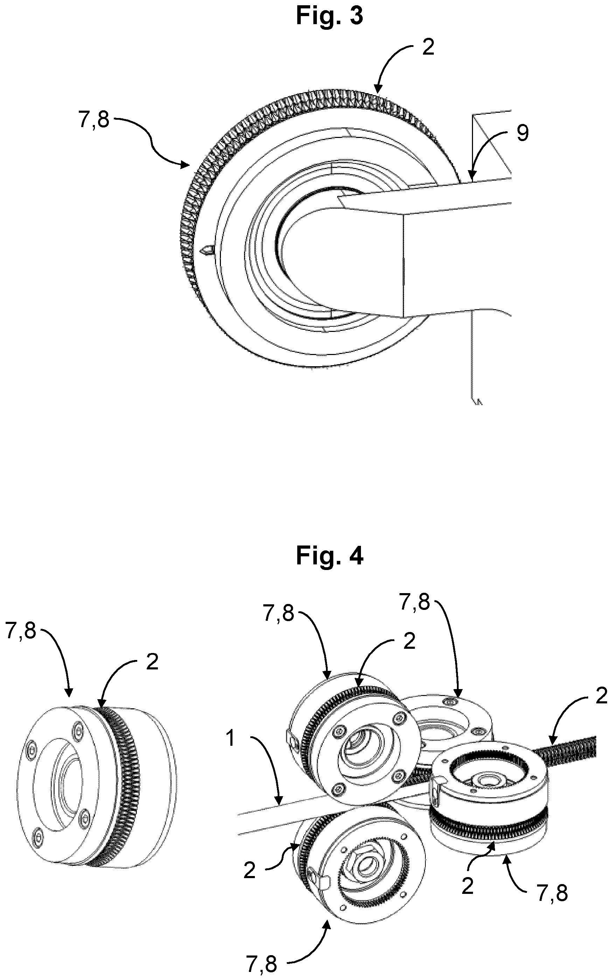

Fig. 3 zeigt eine weitere Prägerolle 8, die in einer positionierbaren Haltevorrichtung 9 drehbar gelagert bzw. positioniert ist.

Fig. 4 zeigt ein weiteres Ausführungsbeispiel einer weiteren Prägerolle 8 und insgesamt vier auf der Schlauchanordnung 1 abrollbare Prägerollen 8 während einer Einbringung der Struktur 2 auf der Schlauchanordnung 1.

Hierbei sind jeweils zwei Prägewerkzeuge 7 bzw. Prägerollen 8 gegenüberliegend angeordnet und bilden somit während des Prägens ein Widerlager. Es zeigt sich zudem, dass jeweils zwei Prägerollenpaare entlang der Schlauchanordnung 1 axial versetzt und in einem rechten Winkel zueinander angeordnet sind.

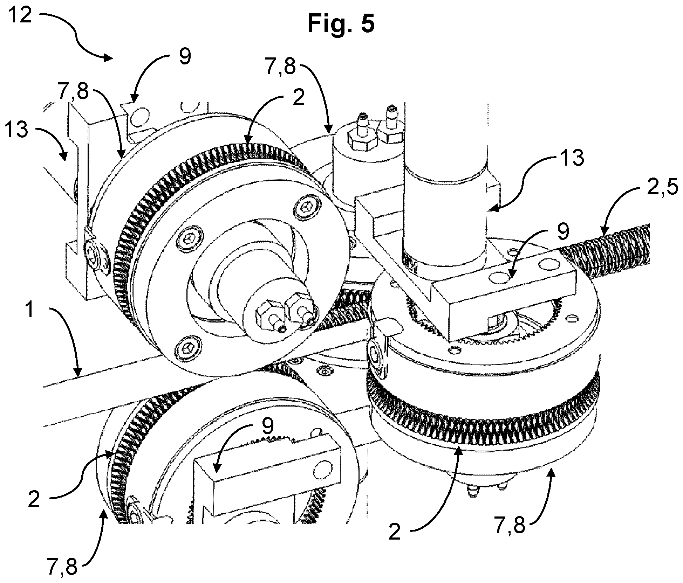

Fig. 5 zeigt eine im Ganzen mit 12 bezeichnete Vorrichtung zur Einbringung der Struktur auf der Schlauchanordnung 1, wobei die Prägerollen 8 in diesem Ausführungsbeispiel gemäß des Ausführungsbeispiels nach Fig. 4 angeordnet sind.

Im Unterschied zu Fig. 4 ist zusätzlich gezeigt, dass die Prägerollen 8 von jeweils bereits zugestellten und positionierten Haltevorrichtungen 9 drehbar gelagert sind und von einer Antriebseinheit 13 angetrieben werden. Hierfür werden die Prägerollen 8 zum Einbringen der Struktur 2 entweder automatisch oder manuell zugefahren.

Die Prägerollen 8 werden zudem von einer nicht näher gezeigten Kühleinheit während des Einbringens der Struktur 2 gekühlt, um ein Anheften der oberhalb einer Glasübergangstemperatur plastifizierten äußeren Schicht 5 der Schlauchanordnung 1 zu verhindern.

In einem nicht gezeigten Ausführungsbeispiel wird ein synchronisiertes Abrollen der Prägewerkzeuge 7 auf der Schlauchanordnung 1 durch eine elektronische Steuerung generiert.

In einem nicht gezeigten Ausführungsbeispiel ist die Vorrichtung 12 mit den Prägewerkzeugen 7 stationär oder adaptierbar hinter einem Extruder angeordnet und somit Teil eines Extrusionsprozesses.

Erfindungsgemäß wird somit eine Schlauchanordnung 1 mit einer Struktur 2 vorgeschlagen, wobei die Struktur 2 umlaufende Rippen 3, deren axiale Erstreckung längs eines Umfangs vorzugsweise periodisch variiert, und lokal begrenzte Lückenausfüllende Erhebungen 4 hat, wodurch wiederum ein Flechteindruck entsteht, ohne dass eine separate Umflechtung der Schlauchanordnung 1 erfolgt, und wobei ein Aufbringen der Struktur 2 durch wenigstens zwei auf der Schlauchanordnung 1 abrollbare, insbesondere sychnronisiert auf der Schlauchanordnung abrollbare, Prägewerkzeuge 7, insbesondere Prägerollen 8 erfolgt, die Teil eines Extrusionsprozesses sind.

### Bezugszeichenliste

- 1: Schlauchanordnung
- 2: Struktur
- 3: Rippen
- 4: Erhebung
- 5: Äußere Schicht
- 6: Vertiefungen
- 7: Prägewerkzeug
- 8: Prägerolle
- 9: Haltevorrichtung
- 10: Erste Schicht
- 11: Zweite Schicht
- 12: Vorrichtung
- 13: Antriebseinheit

## Patentansprüche

1. Schlauchanordnung (1), insbesondere zur Leitung von Fluiden, mit einer außenseitigen Struktur (2), **dadurch gekennzeichnet, dass** die Struktur (2), vorzugsweise bestehend aus einem thermoplastischen Kunststoff, verprägt ist.

2. Schlauchanordnung (1) nach Anspruch 1, **dadurch gekennzeichnet, dass** die Struktur (2) in einer Verlaufsrichtung der Schlauchanordnung (1) periodisch ist und/oder unterschiedliche Schichtdicken, insbesondere einer äußeren Schicht (5), aufweist.

3. Schlauchanordnung (1) nach einem der vorangehenden Ansprüche, **dadurch gekennzeichnet, dass** die Struktur (2) in einer auf einer vorzugsweise ungeprägten inneren Schicht aufgebrachten äußeren Schicht (5), die vorzugsweise stoffschlüssig miteinander verbunden sind, ausgebildet ist.

4. Schlauchanordnung (1) nach einem der vorangehenden Ansprüche, **dadurch gekennzeichnet, dass** die oder eine äußere Schicht (5) der Schlauchanordnung aus einem thermoplastischen Kunststoff und/oder aus einem Elastomer-Kunststoff besteht.

5. Schlauchanordnung (1) nach einem der vorangehenden Ansprüche, **dadurch gekennzeichnet, dass** ein Verhältnis einer Außenschlauchwandstärke zu einer Innenschlauchwandstärke der Schlauchanordnung größer als 0.1 und kleiner als 5, insbesondere 0.1, 0.3...5, vorzugsweise 0.3, ist.

6. Schlauchanordnung (1) nach einem der vorangehenden Ansprüche, **dadurch gekennzeichnet, dass** der geprägte thermoplastische Kunststoff ein Elastizitätsmodul (E-Modul) von mindestens 1000 MPa, insbesondere 1200 MPa, 1300 MPa, vorzugsweise 1700 MPa, hat.

7. Schlauchanordnung (1), insbesondere zur Leitung von Fluiden, mit einer außenseitigen Struktur (2) mit wenigstens einer umlaufenden Rippe (3), **dadurch gekennzeichnet, dass** die wenigstens eine umlaufende Rippe (3) eine axiale Erstreckung hat, die längs eines Umfangs vorzugsweise periodisch variiert, insbesondere wobei mindestens zwei vorzugsweise benachbarte Rippen (3) identisch ausgebildet sind und/oder wobei durch eine Reduzierung der axialen Erstreckung gebildete Lücken durch lokal begrenzte, vorzugsweise passende, Erhebungen (4) ausgefüllt sind.

8. Schlauchanordnung (1) nach dem vorangehenden Anspruch, **dadurch gekennzeichnet, dass** die Leitung (1) mehrschichtig, insbesondere zweischichtig, ausgebildet ist, insbesondere wobei die Struktur (2) auf einer äußeren Schicht (5) ausgebildet ist und/oder wobei zwischen wenigstens zwei Schichten eine stoffschlüssige Verbindung besteht.

9. Schlauchanordnung (1) nach einem der vorangehenden Ansprüche, **dadurch gekennzeichnet, dass** zwischen benachbarten Rippen (3) sich an wenigstens einem Punkt kreuzende und/oder schneidende, insbesondere linienförmige, Vertiefungen (6) ausgebildet sind.

10. Schlauchanordnung (1) nach einem der vorangehenden Ansprüche, **dadurch gekennzeichnet, dass** die Rippen (3) und/oder die Erhebungen (4) bikonvex ausgebildet sind.

11. Schlauchanordnung (1) nach einem der vorangehenden Ansprüche, **dadurch gekennzeichnet, dass** sich die die Lücken ausfüllenden Erhebungen (4), insbesondere in ihrer Dimension, von den Rippen (3) unterscheiden.

12. Schlauchanordnung (1), insbesondere nach einem der vorhergehenden Ansprüche oder nach dem Oberbegriff von Anspruch 7, **dadurch gekennzeichnet, dass** die Struktur (2) umlaufende Rippen (3) hat, deren axiale Erstreckung längs eines Umfangs vorzugsweise periodisch variiert, wobei durch eine Reduzierung der axialen Erstreckung gebildete Lücken durch lokal begrenzte, vorzugsweise passende, zu den Rippen (3) in axialer Erstreckung versetzte Erhebungen (4) ausgefüllt sind, wobei in einem Übergang zwischen einer Rippe (3) und einer Erhebung (4) vorzugsweise umlaufende und/oder geschlossene, insbesondere linienförmig verlaufende, Vertiefungen (6) gebildet sind, wobei sich wenigstens zwei Vertiefungen (6) vorzugsweise mehrfach einander kreuzend schneiden.

13. Vorrichtung (12) zur Einbringung einer Struktur (2) auf einer Schlauchanordnung (1), insbesondere zur Leitung von Fluiden, **dadurch gekennzeichnet, dass** die Vorrichtung (12) stationär und/oder adaptierbar, insbesondere hinter einem Extruder, mit wenigstens zwei auf der Schlauchanordnung (1) abrollbaren, insbesondere synchron zueinander abrollbaren, Prägewerkzeugen (7), insbesondere Prägerollen (8), ausgebildet ist.

14. Vorrichtung (12) nach dem vorangehenden, auf eine Vorrichtung (12) gerichteten Anspruch, **dadurch gekennzeichnet, dass** die wenigstens zwei Prägewerkzeuge (7), insbesondere Prägerollen (8), gegenüberliegend ausgebildet sind, insbesondere so dass diese während der Einbringung der Struktur (2) auf einer extrudierten Schlauchanordnung (1) ein Widerlager bilden.

15. Vorrichtung (12) nach einem der vorangehenden, auf eine Vorrichtung (12) gerichteten Ansprüche, **dadurch gekennzeichnet, dass** die wenigstens zwei Prägewerkzeuge (7), insbesondere Prägerollen (8), von einer Antriebseinheit (13) angetrieben werden.

16. Vorrichtung (12) nach einem der vorangehenden, auf eine Vorrichtung (12) gerichteten Ansprüche, **dadurch gekennzeichnet, dass** die wenigstens zwei Prägewerkzeuge (7), insbesondere Prägerollen (8), von jeweils einer positionierbaren und/oder zustellbaren Haltevorrichtung (9) drehbar gelagert sind.

17. Vorrichtung (12) nach einem der vorangehenden, auf eine Vorrichtung (12) gerichteten Ansprüche, **dadurch gekennzeichnet, dass** wenigstens zwei gegenüberliegende Prägewerkzeuge (7) zu wenigstens zwei weiteren gegenüberliegenden Prägewerkzeugen (7) auf einer gleichen Ebene und/oder axial versetzt, insbesondere in einem Winkel, zueinander ausgebildet sind.

18. Verfahren zur Einbringung einer Struktur (2) auf einer extrudierten Schlauchanordnung(1), insbesondere Schlauchanordnung (1) nach einem der Ansprüche 1 bis 12, **dadurch gekennzeichnet, dass** auf eine erste extrudierte Schicht (10) eine zweite Schicht (11) stoffschlüssig aufgetragen wird, wobei auf die zweite Schicht (11) der Schlauchanordnung (1), insbesondere die äußere Schicht (5) der Schlauchanordnung (1), vorzugsweise oberhalb einer Glasübergangstemperatur über wenigstens zwei auf der Schlauchanordnung (1) abrollbare Prägewerkzeuge (7), insbesondere Prägerollen (8), eine umlaufende Struktur (2) aufgebracht wird.

19. Verfahren nach dem vorangehenden, auf ein Verfahren gerichteten Anspruch, **dadurch gekennzeichnet, dass** die wenigstens zwei Prägewerkzeuge (7), insbesondere Prägerollen (8), synchron zueinander auf der Schlauchanordnung (1) abrollen.

20. Verfahren nach einem der vorangehenden, auf ein Verfahren gerichteten Ansprüche, **dadurch gekennzeichnet, dass** die Prägewerkzeuge (7), insbesondere Prägerollen (8), zur Einbringung der Struktur (2) automatisch und/oder manuell zugefahren und anschließend auseinandergefahren werden.

21. Verfahren nach einem der vorangehenden, auf ein Verfahren gerichteten Ansprüche, **dadurch gekennzeichnet, dass** die Prägewerkzeuge (7), insbesondere Prägerollen (8), vor- und/oder während der Einbringung der Struktur (2) gekühlt werden.

22. Verwendung von Prägewerkzeugen (7), insbesondere Prägerollen (8), als Teil eines Extrusionsprozesses zur Einbringung einer Struktur (2) auf einer Schlauchanordnung (1), insbesondere zur Leitung von Fluiden, insbesondere bei einem Verfahren nach einem der Ansprüche 18 bis 21 und/oder in einer Vorrichtung nach einem der Ansprüche 13 bis 17 und/oder zur Herstellung einer Schlauchanordnung nach einem der Ansprüche 1 bis 12, **dadurch gekennzeichnet, dass** wenigstens zwei gegenüberliegende Prägewerkzeuge (7), insbesondere wenigstens zwei zusammen einen vollständigen Umfang abdeckende Prägewerkzeuge (7), auf der Schlauchanordnung (1) zueinander synchronisiert abrollbar sind und/oder ein Widerlager bilden.
